# EUROPÄISCHE PATENTSCHRIFT

(11) **EP 0 878 687 B1**
(45) Veröffentlichungstag und Bekanntmachung des Hinweises auf die Patenterteilung: **06.05.2004**
(21) Anmeldenummer: 98105687.2
(22) Anmeldetag: 28.03.1998
(51) Int. Cl.: F41H 7/02

(54) **Kampfpanzerturm**
Armoured turret
Tourelle blindée

(30) Priorität: 16.05.1997 DE 19720815
(43) Veröffentlichungstag der Anmeldung: 18.11.1998
(73) Patentinhaber: Krauss-Maffei Wegmann GmbH & Co. KG, 80997 München (DE)
(72) Erfinder: Sprafke, Uwe, Dipl.-Ing., 34270 Schauenburg (DE); Grünewald, Peter, Dipl.-Ing., 34277 Fuldabrück (DE); Kühnert, Dieter, Dipl.-Ing., 34292 Ahnatal (DE)
(74) Vertreter: Feder, Wolf-Dietrich, Dr. Dipl.-Phys.

(56) Entgegenhaltungen:
- DE-C- 4 136 207

## Beschreibung

Die Erfindung betrifft einen Kampfpanzerturm, der einen Kampfraum zur Aufnahme von Besatzungsmitgliedern sowie einen hinter dem Kampfraum angeordneten und von diesem durch eine Trennwand und/oder Tür abgetrennten Elektronikraum aufweist, wobei die Trennwand oder die Tür mit oberen und unteren Luftdurchtrittsöffnungen versehen ist und im Elektronikraum im Bereich einer unteren Luftdurchtrittsöffnung ein Gebläse angeordnet ist.

Ein derartiger Aufbau eines Kampfpanzerturms ist beispielsweise beim Kampfpanzer vom Typ "Leopard 2" verwirklicht.

Es hat sich gezeigt, daß das Einsatzspektrum von Kampfpanzern, beispielsweise im Rahmen von Friedensmissionen erheblich erweitert worden ist. Zu diesem Einsatzspektrum gehört auch das Übernehmen von stationären Sicherungsaufgaben in Gebieten mit wärmerem Klima. Unter diesen Bedingungen kommt der Kühlung des Kampfraumes im Kampfpanzerturm eine zunehmend größere Bedeutung zu.

Wie weiter unten anhand eines in den Zeichnungen dargestellten Beispiels noch näher erläutert, ist es bekannt, bei einem Kampfpanzerturm der eingangs und im Oberbegriff des Patentanspruchs 1 angegebenen Bauart eine Belüftung des hinter dem Kampfraum angeordneten Elektronikraums in der Weise durchzuführen, daß mittels des Gebläses durch die untere Luftdurchtrittsöffnung in der Trennwand oder Tür zwischen Kampfraum und Elektronikraum Luft angesaugt und dem Elektronikraum zugeführt wird, während die Abluft aus dem Elektronikraum durch obere Luftdurchtrittsöffnungen in den Kampfraum zurückströmt. Eine Kühlung des Kampfraums ist hiermit im allgemeinen nicht erreichbar, sondern diese Anlage dient in erster Linie zur Belüftung und Kühlung des Elektronikraumes.

In dem Dokument DE 41 36 207 C1 ist eine Einrichtung zur Belüftung und Klimatisierung von Räumen in Fahrzeugen, insbesondere in Räumen von Kampffahrzeugen, beschrieben, wobei in vom Fahrerraum abgeschotteten Seitennischen Elektronikeinheiten angeordnet sind, denen über einen nachgeschalteten Wärmetauscher einer Kühlanlage Belüftungsluft von einem durch den Fahrerraum geleiteten Luftstrom aus der Umgebungsluft zugeführt wird.

Der Erfindung liegt die Aufgabe zugrunde, einen Kampfpanzerturm, der oben und im Oberbegriff des Patentanspruchs 1 angegebenen Bauart so auszugestalten, daß eine ausreichende Kühlung des Kampfraumes sichergestellt werden kann. Die Ausgestaltung sollte derart sein, daß möglichst auch die Türme bereits vorhandener Kampfpanzer ohne besonderen konstruktiven Aufwand in einer Weise nachgerüstet werden können, daß die Kühlung des Kampfraumes möglich wird.

Die Lösung dieser Aufgabe erfolgt erfindungsgemäß mit den Merkmalen aus dem kennzeichnenden Teil des Patentanspruchs 1. Vorteilhafte Weiterbildungen der Erfindung sind in den abhängigen Ansprüchen beschrieben.

Die Erfindung geht von der Erkenntnis aus, daß sich der besondere Aufbau des Kampfpanzerturms, wie er im Oberbegriff des Patentanspruchs 1 beschrieben ist, dazu ausnutzen läßt, den Kampfpanzerturm in besonders einfacher Weise mit einer Kühlanlage zu versehen unter Ausnutzung bereits vorhandener Teile des Kampfpanzerturms, beispielsweise der oberen und unteren Luftdurchtrittsöffnungen und des im Elektronikraum angeordneten Gebläses.

Im folgenden werden anhand der beigefügten Zeichnungen der Gang der zur Erfindung führenden Überlegungen sowie ein Beispiel für einen in der erfindungsgemäßen Weise ausgerüsteten Kampfpanzerturm näher erläutert.

In den Zeichnungen zeigen:
Fig. 1 in einer stark schematisierten, perspektivischen Darstellung mit Aufreißungen einen Kampfpanzerturm mit Kühlanlage;
die Fig. 2A, 2B und 2C einen Teil des Kampfpanzerturms nach Fig. 1 in einem stark vereinfachten Vertikalschnitt zur Erläuterung der zum Kampfpanzerturm mit Kühlanlage führenden Entwicklungsschritte.

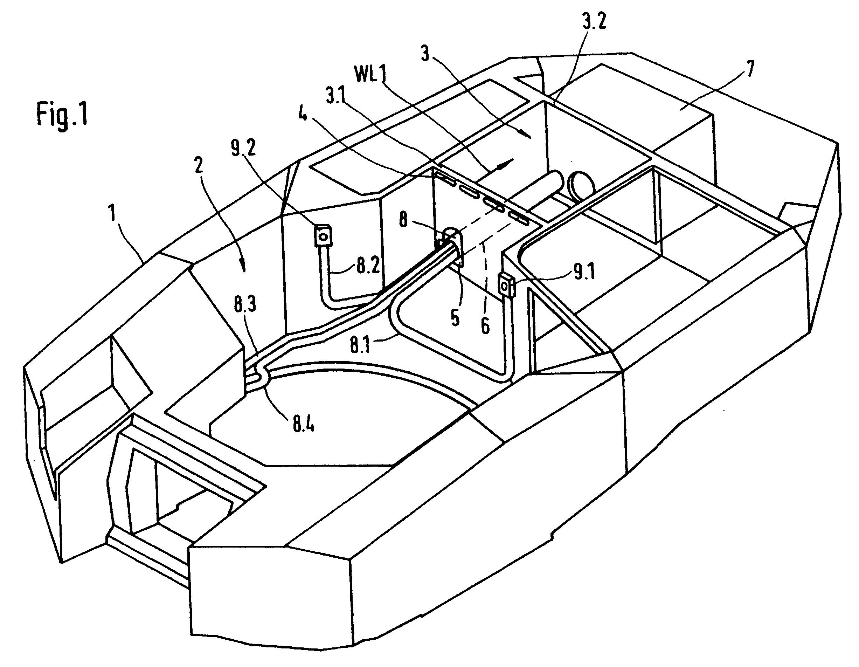

In Fig. 1 ist von einem Kampfpanzerturm lediglich das äußere Rahmenteil mit der Panzerung ohne Dachplatte, ohne Hauptwaffe und ohne Inneneinrichtung dargestellt. Der Kampfpanzerturm 1 besitzt in seinem Innenraum einen Kampfraum 2, in dem die Besatzungsmitglieder untergebracht sind, sowie in nicht dargestellter Weise alle Bedienungs- und Betätigungseinrichtungen für die Waffen, die Beobachtungsgeräte und sonstige Instrumente. Vom vorderen Ende des Kampfpanzerturms 1 her ist in nicht dargestellter Weise die Hauptwaffe in den Turm hineingeführt. Hinter dem Kampfraum 2 ist durch eine Trennwand 3.1, vom Kampfraum 2 getrennt, ein Elektronikraum 3 angeordnet, in dem in ebenfalls nicht dargestellter Weise elektronische Geräte untergebracht sind. An seiner Rückseite besitzt der Elektronikraum 3 eine abschließende Rückwand oder Tür 3.2.

In der Trennwand zwischen Kampfraum 2 und Elektronikraum 3 sind Luftdurchtrittsöffnungen angeordnet, und zwar im oberen Bereich der Trennwand 3.1 die Öffnungen 4 und im unteren Bereich die Öffnung 5. Hinter der Luftdurchtrittsöffnung 5 ist im Elektronikraum 3 ein Gebläse 6 angeordnet, dessen Ausblasende in eine Luftleitung 8 mündet, die durch die Luftdurchtrittsöffnung 5 hindurch in den Kampfraum 2 hineingeführt ist und sich dort in einzelne Luftleitungsstränge 8.1, 8.2, 8.3 und 8.4 aufteilt, die zu verschiedenen Punkten im inneren des Kampfraums 2 geführt sind. So kann beispielsweise die Leitung 8.1 zum Platz des Ladeschützen, die Leitung 8.2 zum Platz des Kommandanten, die Leitung 8.3 zum Platz des Richtschützen und die Leitung 8.4 zum Platz des Fahrers führen. An den Enden der Luftleitungen 8.1 und 8.2 sind verstellbare Ausblasdüsen 9.1 bzw. 9.2 angeordnet. An den nicht sichtbaren Enden der Luftleitungen 8.3 und 8.4 können entsprechende Ausblasdüsen angeordnet sein. Das Ansaugende des Gebläses 6 ist durch die Rückwand 3.2 des Elektronikraums 3 hindurch zum Auslaß eines Kühlaggregats 7 geführt, das im Heck des Kampfpanzerturms 1 noch hinter dem Elektronikraum 3 angeordnet und beispielsweise an der Rückwand bzw. Tür 3.2 befestigt ist. Das Einlaßende des Kühlaggregats mündet in den Elektronikraum 3.

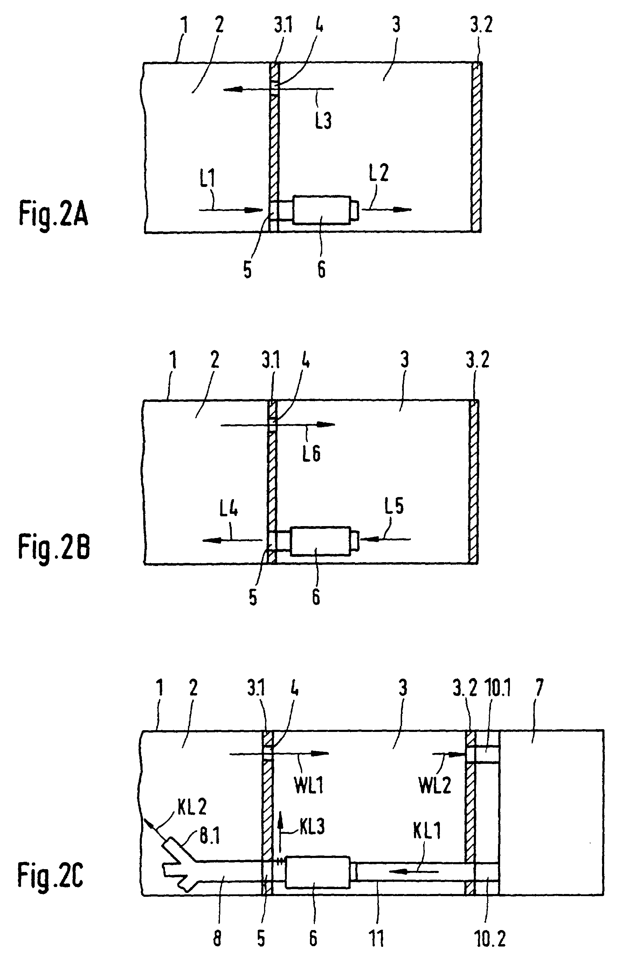

Im folgenden werden die Entwicklung und Wirkungsweise der Anlage nach Fig. 1 anhand der Fig. 2A bis 2C beschrieben.

Fig. 2A zeigt einen Teil des Kampfpanzerturms 1 in der üblichen Weise, wie er beispielsweise beim Kampfpanzer "Leopard 2" ausgebildet ist, ohne daß beziehungsweise bevor eine Kühlanlage installiert ist. Bei der bekannten Ausstattung wird eine Belüftung des Elektronikraums 3 erreicht, indem das Gebläse 6 durch die Luftdurchtrittsöffnung 5 hindurch einen Luftstrom L1 aus dem Kampfraum 2 ansaugt und in den Elektronikraum 3 hinein einen Luftstrom L2 abgibt. Entsprechend strömt im Kreislauf aus dem Elektronikraum 3 ein Luftstrom L3 durch die Luftdurchtrittsöffnungen 4 zurück in den Kampfraum 2.

In Fig. 2B ist gezeigt, wie dieser Luftstrom umkehrbar wird, wenn dafür gesorgt wird, daß das Gebläse 6 in umgekehrter Richtung läuft. Es wird dann ein Luftstrom L5 im Elektronikraum 3 angesaugt und durch die Luftdurchtrittsöffnung 5 als Luftstrom L4 in den Kampfraum 2 abgegeben und von dort strömt ein Luftstrom L6 durch die Luftdurchtrittsöffnung 4 zurück in den Elektronikraum 3. Diese Überlegung führt zu der Erkenntnis, daß bei der Installation einer Kühlanlage im Kampfpanzerturm die vorhandenen Elemente des Turms, nämlich die Luftdurchtrittsöffnungen 4 und 5 sowie das Gebläse 6 beibehalten und zur Installation der Kühlanlage ausgenutzt werden können.

Dies ist in Fig. 2C gezeigt. Das Gebläse 6 wird, wie gemäß Fig. 2B derart betrieben, daß der Luftstrom in Richtung auf den Kampfraum zu gefördert wird. An das nunmehrige Ansaugende des Gebläses 6 ist eine Leitung 11 angeschlossen, die nach hinten durch die Tür 3.2 des Elektronikraums 3 geführt ist und über ein Leitungsstück 10.2 mit dem Auslaß des Kühlaggregats 7 verbunden ist, das hinter dem Elektronikraum 3 angeordnet ist. Eine weitere Öffnung in der Tür 3.2 ist über ein Leitungsstück 10.1 mit dem Einlaß des Kühlaggregats 7 verbunden. Im Anschluß an die Luftdurchtrittsöffnung 5 läuft die Luftleitung 8 in den Kampfraum 2 hinein und verzweigt sich dort in der bereits beschriebenen Weise. Bei der Betätigung des Gebläses 6 wird ein Luftstrom KL1 aus dem Kühlaggregat 7 angesaugt. Es handelt sich hier um Kaltluft. Der Kaltluftstrom wird als Luftstrom KL2 vom Gebläse 6 und die Luftleitung 8 in den Kampfraum 2 hineingeführt. Die sich im oberen Teil des Kampfraums 2 ansammelnde Warmluft läuft als Warmluftstrom WL1 durch die Luftdurchtrittsöffnung 4 in der Trennwand 3.2 zurück in den Elektronikraum 3 und von dort als Luftstrom WL2 und das Leitungsstück 10.1 zum Einlaß des Kühlaggregats 7. Es findet also primär eine Kühlung des Kampfraums 2 statt, sowie sekundär durch den Luftstrom WL1 auch eine Kühlung des Elektronikraums 3. Zur besseren Förderung des Luftkreislaufes können in den Verbindungsleitungen 10.1 und 10.2 oder innerhalb des Kühlaggregats 7 weitere, in entsprechender Richtung arbeitende Gebläse bzw. Ventilatoren angeordnet sein.

Wenn eine noch stärkere Mitkühlung des Elektronikraums 3 gewünscht wird, kann in einem Bypass-Strom aus der Luftleitung 8 ein Kaltluftstrom KL3 innerhalb des Elektronikraums 3 entnommen werden.

Das Kühlaggregat 7 kann in nicht eigens dargestellter Weise durch einen eigenen Motor, beispielsweise einen Dieselmotor, angetrieben sein. Die elektrischen Zusatzgeräte, wie beispielsweise die Gebläse, werden aus dem Fahrzeugbordnetz versorgt. Es ist weiterhin möglich, daß Kühlaggregat elektrisch von einem zusätzlichen Generator anzutreiben, der von einer zusätzlichen Antriebseinheit, beispielsweise einem Dieselmotor her angetrieben wird und nicht nur das Kühlaggregat, sondern auch andere elektrische Verbraucher bei ausgeschaltetem Fahrzeugtriebwerk mit elektrischer Energie versorgt. Auf diese Weise ist es möglich, die Kühlanlage auch bei ausgeschaltetem Fahrzeugtriebwerk einzuschalten. Eine dies leistende "elektrische Versorgungseinrichtung für ein Kampffahrzeug" ist in einer parallel laufenden Patentanmeldung der gleichen Anmelderin mit gleichem Zeitrang beschrieben.

Das Kühlaggregat kann wahlweise im Umluftbetrieb oder mit Frischluftbeimischung arbeiten. Die aus dem Kampfraum abgesaugte und durch den Elektronikraum hindurchgeführte aufgewärmte Abluft wird über ein Filter zum Verdampfer des Kühlaggregats geführt.

Es zeigt sich, daß mit der beschriebenen Kühlanlage auch bei langen Standzeiten und unter extremen Temperaturbedingungen die Temperaturen im Kampfraum unter Panzerschutz auf einem für die Besatzung und die technischen Einrichtungen erträglichen Niveau gehalten werden können. Die Bedienungseinrichtung für die Kühlanlage ist in nicht eigens dargestellter Weise innerhalb des Raums fest installiert.

## Patentansprüche

1. Kampfpanzerturm, der einen Kampfraum (2) zur Aufnahme von Besatzungsmitgliedern sowie einen hinter dem Kampfraum angeordneten und von diesem durch eine Trennwand (3.1) und/oder Tür abgetrennten Elektronikraum (3) aufweist, wobei die Trennwand (3.1) oder die Tür mit oberen und unteren Luftdurchtrittsöffnungen (4.5) versehen ist und im Elektronikraum (3) im Bereich einer unteren Luftdurchtrittsöffnung (5) ein Gebläse (6) angeordnet ist, **dadurch gekennzeichnet, daß** er eine Kühlanlage aufweist, indem das Gebläse (6) so angetrieben ist, daß die Luft (KL1-KL2) in Richtung auf den Kampfraum (2) gefördert wird und dem Ansaugende des Gebläses (6) die Luft von einem Kühlaggregat (7) her zugeführt wird, während an das Ausblasende des Gebläses (6) mindestens eine Luftleitung (8) angeschlossen und durch die untere Luftdurchtrittsöffnung (5) in den Kampfraum (2) geführt ist und das Kühlaggregat (7) hinter dem Elektronikraum (3) angeordnet ist und durch die hintere Wand oder Tür (3.2) des Elektronikraums (3) eine an das Gebläse (6) angeschlossene Luftzuführungsleitung (11) geführt und mit dem Auslaß des Kühlaggregats verbunden ist, während eine Luftabführungsleitung (10.1) vom Elektronikraum (3) durch dessen hintere Wand oder Tür (3.2) zum Einlaß des Kühlaggregats (7) geführt ist.

2. Kampfpanzerturm nach Anspruch 1, **dadurch gekennzeichnet, daß** an das Ausblasende des Gebläses (6) über einen Verteiler mehrere Luftleitungen (8.1 bis 8.4) angeschlossen sind, die zu unterschiedlichen Stellen im Kampfraum (2) geführt sind.

3. Kampfpanzerturm nach Anspruch 2, **dadurch gekennzeichnet, daß** an den Enden der Luftleitungen (8.1, 8.2) im Kampfraum (2) verstellbare Ausblasdüsen (9.1, 9.2) angeordnet sind.

4. Kampfpanzerturm nach einem der Ansprüche 1 bis 3, **dadurch gekennzeichnet, daß** im oder unmittelbar vor dem Einlaß und/oder dem Auslaß des Kühlaggregats(7) Zusatzgebläse angeordnet sind.

5. Kampfpanzerturm nach einem der Ansprüche 1 bis 4, **dadurch gekennzeichnet, daß** in einem Bypass ein Teil (KL3) der gekühlten Luft in den Elektronikraum (3) geleitet wird.

6. Kampfpanzerturm nach einem der Ansprüche 1 bis 5, **dadurch gekennzeichnet, daß** die Kühlanlage im Umluftbetrieb arbeitet.

7. Kampfpanzerturm nach Anspruch 6, **dadurch gekennzeichnet, daß** der Umluft ein vorgegebener Anteil an Frischluft beigemischt wird.

## Claims

1. Combat tank turret, which comprises a combat area (2) for accommodating crew members as well as an electronics area (3) disposed behind the combat area and separated from it by a partition wall (3.1) and/or door, wherein the partition wall (3.1) or door is provided with upper and lower air vents (4.5) and in the electronics area (3) in the region of a lower air vent (5) a fan (6) is disposed, **characterized in that** the turret comprises a cooling system **in that** the fan (6) is operated in such a way that the air (KL1-KL2) is conveyed in the direction of the combat area (2) and the air from a cooling apparatus (7) is supplied to the intake end of the fan (6), while at least one air line (8) is connected to the blow-out end of the fan (6) and extends through the lower air vent (5) into the combat area (2) and the cooling apparatus (7) is disposed behind the electronics area (3) and an air supply line (11) connected to the fan (6) extends through the rear wall or door (3.2) of the electronics area (3) and is connected to the outlet of the cooling apparatus, while an air removal line (10.1) extends from the electronics area (3), through the rear wall or door (3.2) thereof to the inlet of the cooling apparatus (7).

2. Combat tank turret according to claim 1, **characterized in that** a plurality of air lines (8.1 to 8.4) are connected by a distributor to the blow-out end of the fan (6) and lead to different points in the combat area (2).

3. Combat tank turret according to claim 2, **characterized in that** adjustable blow-out nozzles (9.1, 9.2) are disposed on the ends of the air lines (8.1, 8.2) in the combat area (2).

4. Combat tank turret according to one of claims 1 to 3, **characterized in that** additional fans are disposed in, or immediately in front of, the inlet and/or the outlet of the cooling apparatus (7).

5. Combat tank turret according to one of claims 1 to 4, **characterized in that** in a bypass a fraction (KL3) of the cooled air is directed into the electronics area (3).

6. Combat tank turret according to one of claims 1 to 5, **characterized in that** the cooling system operates in recirculation mode.

7. Combat tank turret according to claim 6, **characterized in that** a preset percentage of fresh air is admixed to the recirculated air.

## Revendications

1. Tourelle de char de combat, qui comprend une enceinte ou un compartiment de combat (2) destiné à abriter des membres d'équipage, ainsi qu'un compartiment d'électronique (3) disposé derrière le compartiment de combat et séparé de celui-ci par une cloison de séparation (3.1) et/ou une porte, la cloison de séparation (3.1) ou la porte étant pourvue d'ouvertures de passage d'air supérieures et inférieures (4.5), et un ventilateur (6) étant disposé dans le compartiment d'électronique (3), dans la zone d'une ouverture de passage d'air inférieure (5),
**caractérisée en ce qu'**elle comprend une installation de climatisation (refroidissement) réalisée de la manière suivante, à savoir que le ventilateur (6) est entraîné de façon à ce que l'air (KL1-KL2) soit transporté en direction du compartiment de combat (2), et à l'extrémité d'aspiration du ventilateur (6) est amené l'air en provenance d'un groupe de réfrigération (7), tandis qu'à l'extrémité de refoulement du ventilateur (6) est raccordée au moins une conduite d'air (8) menant à travers l'ouverture de passage d'air inférieure (5) dans le compartiment de combat (2), et le groupe de réfrigération (7) est disposé derrière le compartiment d'électronique (3), et une conduite d'amenée d'air (11) raccordée au ventilateur (6) mène à travers la paroi arrière ou porte arrière (3.2) du compartiment d'électronique (3) et est reliée à la sortie du groupe de réfrigération, tandis qu'une conduite d'évacuation d'air (10.1) mène du compartiment d'électronique (3), à travers sa paroi arrière ou porte arrière (3.2), à l'entrée du groupe de réfrigération (7).

2. Tourelle de char de combat selon la revendication 1, **caractérisée en ce qu'**à l'extrémité de refoulement du ventilateur (6), sont raccordées, par l'intermédiaire d'un distributeur, plusieurs conduites d'air (8.1 à 8.4) qui mènent à des zones différentes dans le compartiment de combat (2).

3. Tourelle de char de combat selon la revendication 2, **caractérisée en ce qu'**aux extrémités des conduites d'air (8.1, 8.2) dans le compartiment de combat (2), sont disposées des buses de soufflage réglables (9.1, 9.2).

4. Tourelle de char de combat selon l'une des revendications 1 à 3, **caractérisée en ce que** dans ou directement devant l'entrée et/ou la sortie du groupe de réfrigération (7), sont disposés des ventilateurs additionnels.

5. Tourelle de char de combat selon l'une des revendications 1 à 4, **caractérisée en ce que** dans une dérivation, une partie (KL3) de l'air refroidi est dirigée dans le compartiment d'électronique (3).

6. Tourelle de char de combat selon l'une des revendications 1 à 5, **caractérisée en ce que** l'installation de climatisation fonctionne selon un mode avec circulation d'air en circuit.

7. Tourelle de char de combat selon la revendication 6, **caractérisée en ce qu'**à l'air en circuit est mélangée une proportion prédéterminée d'air frais.
